# EUROPEAN PATENT APPLICATION

(11) **EP 4 400 818 A1**
(43) Date of publication of application: **17.07.2024**
(21) Application number: 22906909.1
(22) Date of filing: 15.07.2022
(51) Int. Cl.: G01J 9/00

(54) **WAVEFRONT MEASUREMENT DEVICE AND WAVEFRONT MEASUREMENT METHOD**

(30) Priority: 17.12.2021 JP 2021204867
(71) Applicant: Hamamatsu Photonics K.K., Hamamatsu-shi, Shizuoka 435-8558 (JP)
(72) Inventor: KAWAI, Kazuki, Hamamatsu-shi, Shizuoka 435-8558 (JP); KOBAYASHI, Satoru, Hamamatsu-shi, Shizuoka 435-8558 (JP); KATO, Yoshinori, Hamamatsu-shi, Shizuoka 435-8558 (JP); SEKINE, Takashi, Hamamatsu-shi, Shizuoka 435-8558 (JP); MORITA, Takaaki, Hamamatsu-shi, Shizuoka 435-8558 (JP); IKEYA, Yuki, Hamamatsu-shi, Shizuoka 435-8558 (JP); IGUCHI, Takuto, Hamamatsu-shi, Shizuoka 435-8558 (JP)
(74) Representative: Grünecker Patent- und Rechtsanwälte PartG mbB
(86) International application number: PCT/JP2022/027892
(87) International publication number: WO 2023/112372

(57) **Abstract**

A wavefront measurement device 1 includes: a phase modulation unit 2 having a spatial light modulator 7 on which incident light L0 is incident; a pattern generation unit 3 configured to generate a phase pattern 11 to be inputted to the spatial light modulator 7; an imaging unit 4 having an imaging region 14 for imaging an image of a portion of the incident light L0 modulated by the spatial light modulator 7 as measurement light L1; and an analysis unit 5 configured to analyze a wavefront of the incident light L0 based on an imaging result by the imaging unit 4, in which the pattern generation unit 3 generates a plurality of phase patterns 11 for which a measurement virtual pattern 12 is shifted to positions different from each other such that a focused spot 16 of the measurement light L1 modulated by the spatial light modulator 7 shifts over time to different positions in the imaging region 14.

## Description

### Technical Field

The present disclosure relates to a wavefront measurement device and a wavefront measurement method.

### Background Art

Conventionally, a spatial light modulator (SLM) is known as a device that electrically controls and modulates a spatial distribution of light from a light source. The spatial light modulator has various applications such as an optical wave forming, optical pulse forming, optical measurement, and optical calculation. In addition, the spatial light modulator is also expected to be applied to optical wavefront measurement in consideration of fields such as laser processing.

For example, in the technique described in Non Patent Literature 1, a beam is modulated using a spatial light modulator displaying a dual microlens array pattern, and displacement amounts from a reference position in a linear spot and a focused spot focused by each microlens are acquired by a camera. A phase gradient in a beam cross section is measured by shifting a detection region according to the displacement amounts of the linear spot and the focused spot and acquiring the displacement amounts of 2 × 2 focused spots in each detection region.

In addition, for example, in the technique described in Non Patent Literature 2, a beam is modulated using a spatial light modulator displaying a micro-hologram array pattern, and a displacement amount from a reference position in an arbitrary multi-point spot is acquired by a camera. In Non Patent Literature 2, by measuring a phase gradient in a beam cross section based on the displacement amount of the arbitrary multi-point spot, the displacement amount from the reference position can be recognized even when a focused spot overlaps an adjacent detection region.

### Citation List

### Non Patent Literature

Non Patent Literature 1: "Shack-Hartmann wavefront sensor with large dynamic range by adaptive spot search method" Hironobu Shinto et al., Applied Optics Vol. 55, Issue 20, pp. 5413-5418 (2016)
Non Patent Literature 2: "Study on Optical Application of Functional Phase Modulation Pattern", Yusuke Saita, Graduate School of System and Information Science, Kobe University, dissertation KO-6649, published on March 1, 2017

### Summary of Invention

### Technical Problem

In the wavefront measurement of the beam, a technical problem is to achieve both expansion of a dynamic range and improvement of spatial resolution. In the technique described in Non Patent Literature 1, when a wavefront having a large curvature is modulated by a microlens pattern or an astigmatic microlens pattern, there may be a problem that shapes of the linear spot and the focused spot are distorted. When the spot shape is not recognized due to the distortion, pattern matching fails, and thus it is considered that it is difficult to secure the dynamic range.

In addition, the technique described in Non Patent Literature 2 has a problem that a certain number of pixels are required to generate a micro-hologram capable of obtaining a good reproduced image. Therefore, there is a problem that the spatial resolution depends on the number of pixels of the spatial light modulator to be used.

The present disclosure has been made to solve the above problems, and an object thereof is to provide a wavefront measurement device and a wavefront measurement method capable of achieving both expansion of a dynamic range and improvement of spatial resolution.

### Solution to Problem

A wavefront measurement device according to one aspect of the present disclosure includes: a phase modulation unit having a spatial light modulator that modulates incident light; a pattern generation unit configured to generate a phase pattern to be inputted to the spatial light modulator; an imaging unit having an imaging region for imaging an image of at least a portion of the incident light modulated by the spatial light modulator as measurement light; and an analysis unit configured to analyze a wavefront of the incident light based on an imaging result by the imaging unit, in which the pattern generation unit generates a plurality of phase patterns for which a measurement virtual pattern is shifted to positions different from each other such that a focused spot of the measurement light modulated by the spatial light modulator shifts over time to different positions in the imaging region.

In the wavefront measurement device, in the plurality of phase patterns to be inputted to the spatial light modulator, the measurement virtual pattern is shifted to positions different from each other such that the focused spot of the measurement light modulated by the spatial light modulator shifts over time to different positions in the imaging region. As a result, in the plurality of phase patterns, a pitch (center-to-center distance) of the measurement virtual patterns can be increased, and an arrangement pitch of the focused spots in the imaging region can be increased. By increasing the arrangement pitch of the focused spots, a detectable range per unit of the focused spot can be widened, such that a dynamic range can be expanded. Further, by shifting the focused spot over time, the spatial resolution can be improved in a state where the dynamic range is expanded. That is, at the time of imaging using a plurality of phase patterns, imaging is performed in a state where the arrangement pitch of the focused spots is increased, and imaging results obtained by shifting and imaging the focused spot by the plurality of phase patterns overlap, whereby the spatial resolution is improved. Therefore, in this wavefront measurement device, both the expansion of the dynamic range and the improvement of the spatial resolution can be achieved.

The pattern generation unit may form a plurality of measurement virtual patterns in each of the plurality of phase patterns. In this case, since the spatial resolution of the image obtained by one imaging can be improved, the number of times of shifting (the number of times of imaging) the focused spot can be reduced. Therefore, a scanning time in a cross section of the incident light by the measurement virtual pattern can be shortened.

The pattern generation unit may form a single measurement virtual pattern in each of the plurality of phase patterns. In this case, the detectable range per unit of the focused spot of the measurement light can be sufficiently secured. Therefore, the dynamic range can be further expanded.

The pattern generation unit may generate each phase pattern such that the measurement virtual patterns do not overlap in a case where the plurality of phase patterns overlap each other over time. In this case, it is possible to perform wavefront measurement in an entire modulation region of the spatial light modulator with minimum scanning as compared with the case of generating the plurality of phase patterns such that the measurement virtual patterns partially overlap each other.

The pattern generation unit may generate each phase pattern such that the measurement virtual patterns partially overlap each other in a case where the plurality of phase patterns overlap over time. In this case, since the arrangement pitch of the focused spots in the imaging region can be reduced, the spatial resolution can be further improved.

The pattern generation unit may generate each phase pattern such that the measurement virtual patterns included in each of the plurality of phase patterns occupy only a part of a modulatable region in the spatial light modulator. In this case, the measurement light modulated by the measurement virtual pattern and light modulated by a portion other than the measurement virtual pattern can be simultaneously generated. Therefore, it is possible to extract light other than the measurement light to an outside as output light while performing wavefront measurement of the incident light by the measurement light.

The pattern generation unit may generate each phase pattern such that the measurement virtual patterns overlap an entire incident region of the incident light in the spatial light modulator when the plurality of phase patterns overlap over time. In this case, the wavefront measurement can be performed in the entire incident region of the incident light.

The pattern generation unit may generate and update the wavefront modulation pattern for the incident light based on the analysis result by the analysis unit. This makes it possible to perform wavefront modulation of the incident light while performing the wavefront measurement of the incident light.

In the incident light, a focal length of the measurement light modulated in the measurement virtual pattern and a focal length of the light modulated in the portion other than the measurement virtual pattern may be different from each other. In this case, even when the light modulated in the portion other than the measurement virtual pattern is extracted as the output light while performing the wavefront measurement of the incident light, it is possible to prevent the output light from focusing on the imaging region of the imaging unit and to prevent the measurement light from focusing on an extraction destination of the output light.

A wavefront measurement method according to one aspect of the present disclosure includes: a pattern input step of inputting a phase pattern to a spatial light modulator; a phase modulation step of causing incident light to be incident on the spatial light modulator to which the phase pattern is inputted and performing phase modulation on the incident light; an imaging step of imaging a part of the incident light modulated by the spatial light modulator as measurement light in an imaging region of an imaging unit; and an analysis step of analyzing a wavefront of the incident light based on an imaging result in the imaging step, in which in the pattern input step, a plurality of phase patterns for which a measurement virtual pattern is shifted to positions different from each other are inputted such that the measurement light modulated by the spatial light modulator is focused at different positions in the imaging region.

In this wavefront measurement method, in the plurality of phase patterns to be inputted to the spatial light modulator, the measurement virtual pattern shifts to positions different from each other, such that a focused spot of the measurement light modulated by the spatial light modulator shifts over time to different positions in the imaging region. As a result, in the plurality of phase patterns, a pitch (center-to-center distance) of the measurement virtual patterns can be increased, and an arrangement pitch of the focused spots in the imaging region can be increased. By increasing the arrangement pitch of the focused spots, a detectable range per unit of the focused spot can be widened, such that a dynamic range can be expanded. Further, by shifting the focused spot over time, the spatial resolution can be improved in a state where the dynamic range is expanded. That is, at the time of imaging using a plurality of phase patterns, imaging is performed in a state where the arrangement pitch of the focused spots is increased, and imaging results obtained by shifting and imaging the focused spot by the plurality of phase patterns overlap, whereby the spatial resolution is improved. Therefore, in this wavefront measurement method, both the expansion of the dynamic range and the improvement of the spatial resolution can be achieved.

### Advantageous Effects of Invention

According to the present disclosure, both expansion of a dynamic range and improvement of spatial resolution can be achieved.

### Brief Description of Drawings

FIG. 1 is a principle diagram of general wavefront measurement using a spatial light modulator.
FIG. 2(a) is a schematic diagram illustrating an example of a focused spot on an imaging region, and FIG. 2(b) is a schematic diagram illustrating an example of a case where it is difficult to detect the focused spot.
FIG. 3 is a principle diagram of wavefront measurement in a case where an arrangement pitch of measurement virtual patterns is larger than that in FIG. 1.
FIG. 4 is a principle diagram of a wavefront measurement device according to the present embodiment.
FIG. 5 is a schematic diagram illustrating a configuration of the wavefront measurement device according to the present embodiment.
FIGS. 6(a) to 6(d) are schematic diagrams illustrating examples of phase patterns generated by a pattern generation unit.
FIGS. 7(a) to 7(d) are schematic diagrams illustrating examples of focused spots imaged by an imaging unit in a case where the phase patterns illustrated in FIGS. 6(a) to 6(d) are used.
FIG. 8 is a schematic diagram illustrating an example of a phase pattern in which a measurement virtual pattern is superimposed on a wavefront modulation pattern.
FIG. 9 is a flowchart illustrating an example of an operation of the wavefront measurement device illustrated in FIG. 5.
FIG. 10 is a schematic diagram illustrating a configuration of a wavefront measurement device according to a modification.
FIG. 11 is a schematic diagram illustrating a configuration of a wavefront measurement device according to another modification.
FIGS. 12(a) and (b) are schematic diagrams illustrating modifications of phase patterns generated by the pattern generation unit.
FIGS. 13(a) and (b) are schematic diagrams illustrating examples of focused spots imaged by the imaging unit in a case where the phase patterns illustrated in FIGS. 12(a) and 12(b) are used.
FIGS. 14(a) and (b) are schematic diagrams illustrating another modifications of the phase patterns generated by the pattern generation unit.
FIGS. 15(a) and (b) are schematic diagrams illustrating examples of focused spots imaged by the imaging unit in a case where the phase patterns illustrated in FIGS. 14(a) and 14(b) are used.
FIGS. 16(a) and (b) are schematic diagrams illustrating another example of a shifting method of a measurement virtual pattern 12.
FIGS. 17(a) and (b) are schematic diagrams illustrating still another example of the shifting method of the measurement virtual pattern 12.
FIG. 18 is a schematic diagram illustrating still another example of the shifting method of the measurement virtual pattern.
FIG. 19 is a schematic diagram illustrating another example of the measurement virtual pattern.

### Description of Embodiments

Hereinafter, a preferred embodiment of a wavefront measurement device and a wavefront measurement method according to one aspect of the present disclosure will be described in detail with reference to the drawings.

### [Principle of General Wavefront Measurement Using Spatial Light Modulator]

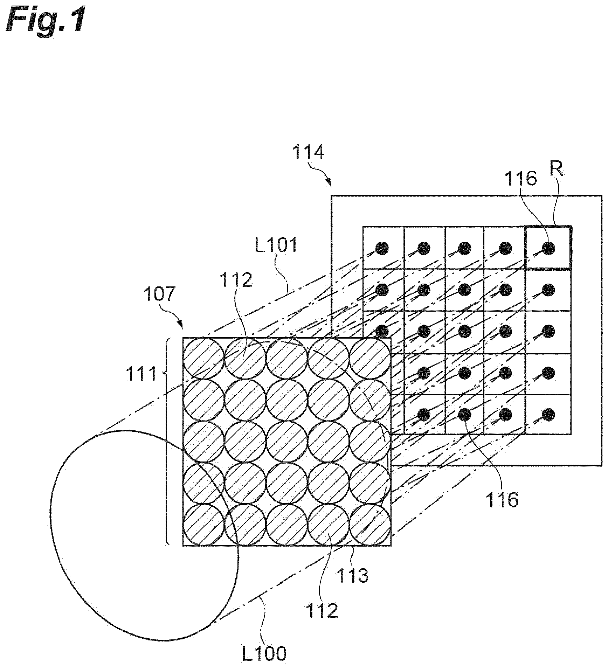

FIG. 1 is a principle diagram of general wavefront measurement using a spatial light modulator. As illustrated in the drawing, in the general wavefront measurement using the spatial light modulator, a phase pattern 111 is inputted to a modulatable region 113 of a spatial light modulator 107. In the phase pattern 111, for example, microlens-shaped measurement virtual patterns 112 are arranged in a matrix. When incident light L100 is incident on the spatial light modulator 107 to which the phase pattern 111 is inputted, the incident light L100 is modulated by the measurement virtual patterns 112, and measurement light L101 is generated. Then, a plurality of focused spots 116 by the measurement light L101 are formed in an imaging region 114 of an imaging unit.

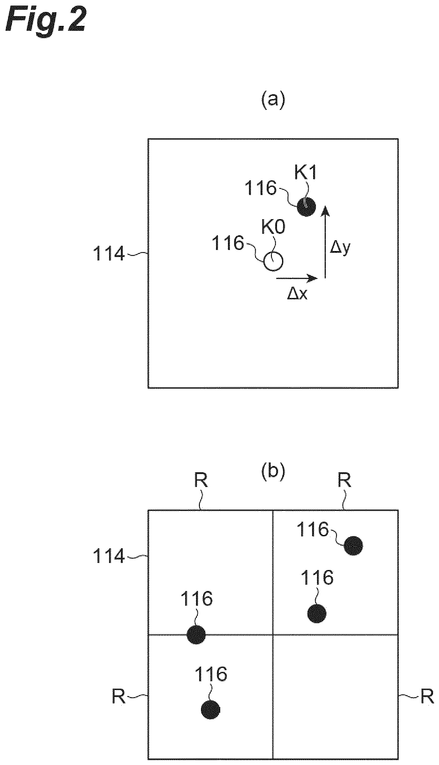

As illustrated in FIG. 2(a), in a region where a wavefront of the incident light L100 is not distorted, the focused spot 116 is focused on a reference position K0 coinciding with an optical axis of the measurement virtual pattern 112 on the imaging region 114. On the other hand, in a region where a wavefront of the incident light L100 is distorted, the focused spot 116 is focused on a displacement position K1 displaced by (Δx, Δy) from the reference position K0. By detecting a displacement amount from the reference position K0 for each focused spot 116, it is possible to detect distortion of the wavefront of the incident light L100 in a cross-sectional region incident on the measurement virtual pattern 112 corresponding to the focused spot 116.

An arrangement pitch of the plurality of focused spots 116 in the imaging region 114 is determined by an arrangement pitch of the measurement virtual patterns 112 (center-to-center distance of the measurement virtual patterns 112). A size of a detectable range R per unit of the focused spot 116 is determined by the arrangement pitch of the focused spots 116. As illustrated in FIG. 2(b), when the focused spot 116 does not exist in the detectable range R (lower right detectable range R), when two or more focused spots 116 exist in one detectable range R (upper right detectable range R), or when the focused spot 116 exists on a boundary between adjacent detectable ranges R and R, it is difficult to detect which reference position K0 of the detectable range R the focused spot 116 is displaced from. An upper limit of the detectable displacement amount of the focused spot 116 is limited within the detectable range R.

Therefore, a dynamic range of the wavefront measurement of the incident light L100 depends on the size of the detectable range R, that is, the arrangement pitch of the measurement virtual patterns 112. The larger the arrangement pitch of the measurement virtual patterns 112, the sparser an interval between the focused spots 116 in the imaging region 114, and the larger the detectable range R, the larger the dynamic range of the wavefront measurement. The smaller the arrangement pitch of the measurement virtual patterns 112, the denser the interval between the focused spots 116 in the imaging region 114, and the smaller the detectable range R, the smaller the dynamic range of the wavefront measurement.

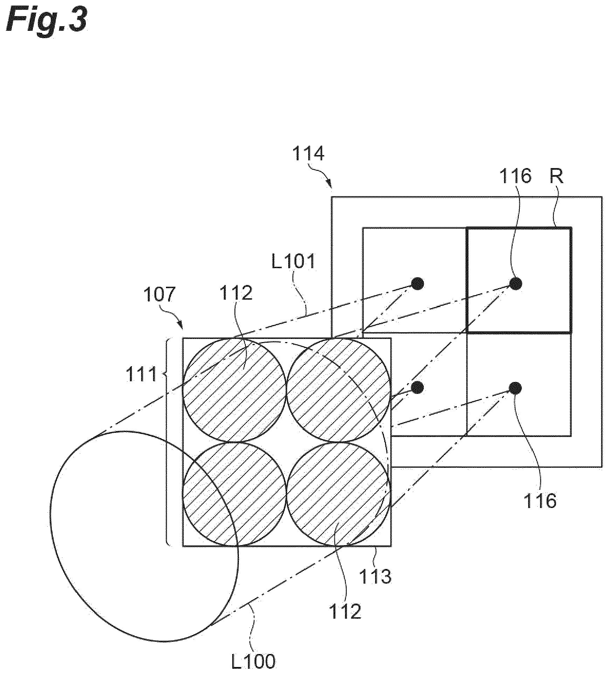

On the other hand, in the general wavefront measurement illustrated in FIG. 1, the spatial resolution of the wavefront measurement of the incident light L100 depends on the arrangement pitch of the measurement virtual patterns 112. For example, in the form of FIG. 3, the arrangement pitch of the measurement virtual patterns 112 is larger than that in the form of FIG. 1. The smaller the arrangement pitch of the measurement virtual patterns 112, the denser the interval between the focused spots 116 in the imaging region 114 and the higher the spatial resolution of the wavefront measurement. The larger the arrangement pitch of the measurement virtual patterns 112, the sparser the interval between the focused spots 116 in the imaging region 114 and the lower the spatial resolution of the wavefront measurement. Therefore, in the general wavefront measurement using the spatial light modulator 107, it can be said that the dynamic range and the spatial resolution are in a trade-off relationship.

### [Wavefront Measurement Device According to Present Embodiment]

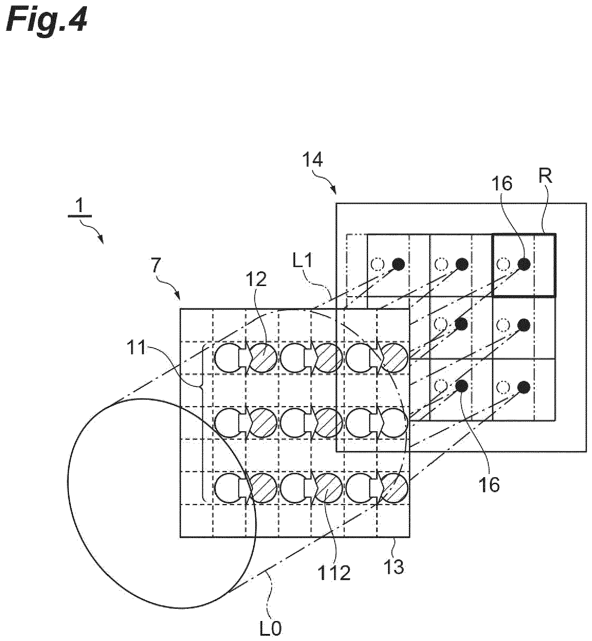

In view of the above problem, an object of the wavefront measurement device according to the present embodiment is to achieve both expansion of the dynamic range and improvement of the spatial resolution. FIG. 4 is a principle diagram of the wavefront measurement device according to the present embodiment. As illustrated in the drawing, in the wavefront measurement device 1 according to the present embodiment, the measurement virtual patterns 12 shift to positions different from each other in the plurality of phase patterns 11 to be inputted to the spatial light modulator 7. In the wavefront measurement device 1, the plurality of phase patterns 11 are sequentially inputted to the spatial light modulator 7, such that the measurement virtual patterns 12 in a modulatable region 13 of the spatial light modulator 7 are displaced over time. As a result, the focused spot 16 of the measurement light L1 modulated by the spatial light modulator 7 and the detectable range R per unit of the focused spot 16 shift over time to different positions of the imaging region 14.

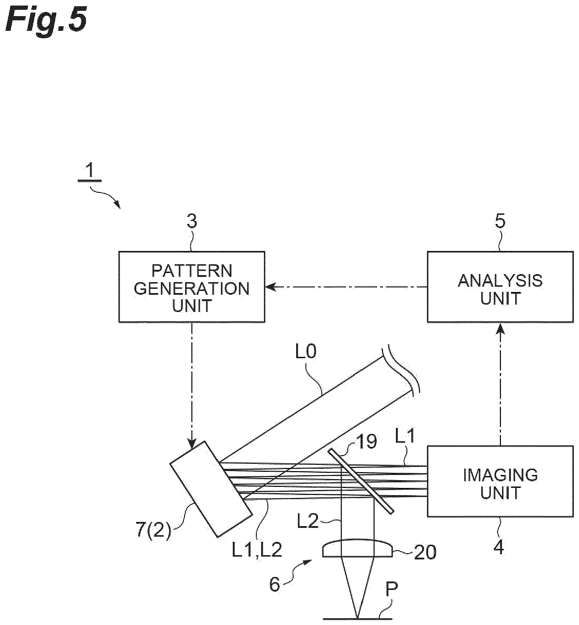

Hereinafter, a configuration of the above-described wavefront measurement device 1 will be described in detail. FIG. 5 is a schematic diagram illustrating a configuration of the wavefront measurement device according to one embodiment of the present disclosure. As illustrated in the drawing, the wavefront measurement device 1 includes a phase modulation unit 2, a pattern generation unit 3, an imaging unit 4, an analysis unit 5, and an output unit 6. In the example of FIG. 5, the wavefront measurement device 1 is configured as a laser processing apparatus. The wavefront measurement device 1 as the laser processing apparatus processes a processing target P by emitting output light L2 whose wavefront has been corrected by the phase modulation unit 2.

The phase modulation unit 2 has the spatial light modulator 7 (see FIG. 4) on which incident light L0 is incident. The spatial light modulator 7 is a device that electrically controls and modulates a spatial distribution of light from a light source. The incident light L0 is light that is a source of the measurement light L1 and the output light L2. Here, in the incident light L0, a portion modulated by the measurement virtual pattern 12 to be described later is the measurement light L1, and a portion modulated by a portion other than the measurement virtual pattern 12 is the output light L2. Examples of the light source (not illustrated) that outputs the incident light L0 include a fiber laser and a solid-state laser. The oscillation form of the laser light may be either pulse oscillation or continuous oscillation.

The pattern generation unit 3 is a unit that generates a phase pattern to be inputted to the spatial light modulator 7. The pattern generation unit 3 is physically a computer system including a memory such as a RAM and a ROM, a processor (arithmetic circuit) such as a CPU, a communication interface, and a storage unit such as a hard disk. Examples of the computer system include a personal computer, a cloud server, a smart device (smartphone, tablet terminal, or the like), a microcomputer, and a field-programmable gate array (FPGA). The pattern generation unit 3 functions as a controller of the spatial light modulator 7 by executing a program stored in the memory by the CPU of the computer system.

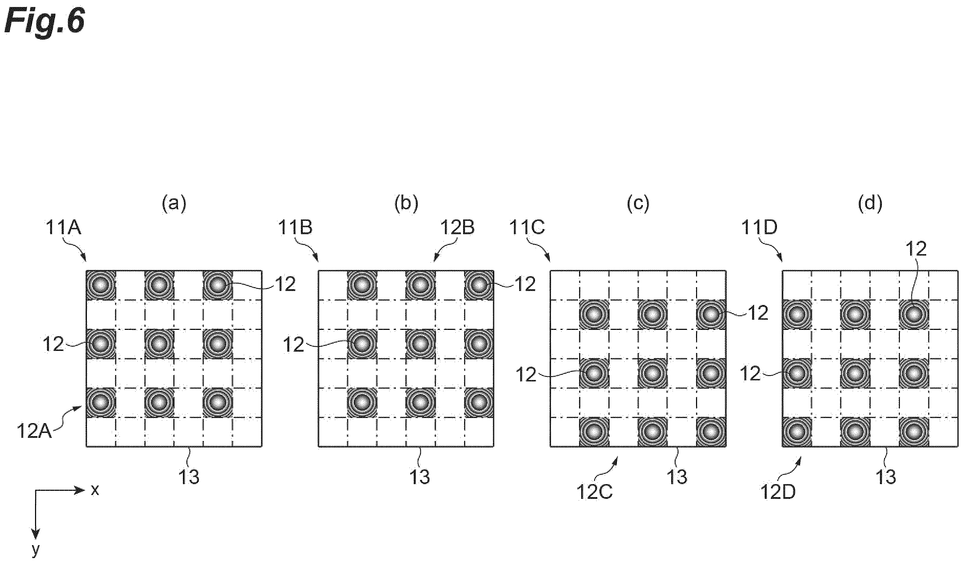

FIGS. 6(a) to 6(d) are schematic diagrams illustrating examples of phase patterns generated by the pattern generation unit. As illustrated in FIGS. 6(a) to 6(d), the pattern generation unit 3 repeatedly generates a plurality of phase patterns 11A to 11D for which the measurement virtual patterns 12 are shifted to positions different from each other in this order. Here, the pattern generation unit 3 forms a plurality of measurement virtual pattern groups 12A to 12D in each of the phase patterns 11A to 11D.

In the examples of FIGS. 6(a) to 6(d), the measurement virtual pattern groups 12A to 12D included in each of the phase patterns 11A to 11D are formed so as to occupy only a part of the modulatable region 13 in the spatial light modulator 7. That is, when the phase patterns 11A to 11D are inputted to the spatial light modulator 7, a region where the measurement virtual patterns 12 are not formed exists in the modulatable region 13 of the spatial light modulator 7.

In the example of the drawing, in the phase patterns 11A to 11D, the measurement virtual pattern groups 12A to 12D are configured by total of nine measurement virtual patterns 12 in a 3 × 3 matrix. The measurement virtual patterns 12 are, for example, square-shaped microlens-shaped patterns. The adjacent measurement virtual patterns 12 and 12 are separated from each other at an interval corresponding to one measurement virtual pattern 12. That is, in the examples of FIGS. 6(a) to 6(d), the arrangement pitch of the measurement virtual patterns 12 (center-to-center distance of the adj acent measurement virtual patterns 12 and 12) is equal to twice a length of one side of the square measurement virtual pattern 12. Accordingly, when the phase patterns 11A to 11D overlap over time, the measurement virtual pattern groups 12A to 12D do not overlap with each other.

In a case where a position of the measurement virtual pattern group 12A of the phase pattern 11A is set as a reference position, the measurement virtual pattern group 12B of the phase pattern 11B is shifted in a + x direction (right direction in the drawing) by one measurement virtual pattern 12 with respect to the measurement virtual pattern group 12A of the phase pattern 11A (see FIG. 6(b)). The measurement virtual pattern group 12C of the phase pattern 11C is shifted in a + y direction (downward direction in the drawing) by one measurement virtual pattern 12 with respect to the measurement virtual pattern group 12B of the phase pattern 11B (see FIG. 6(c)).

The measurement virtual pattern group 12D of the phase pattern 11D is shifted in a - x direction (left direction in the drawing) by one measurement virtual pattern 12 with respect to the measurement virtual pattern group 12C of the phase pattern 11C (see FIG. 6(d)). The measurement virtual pattern group 12A of the phase pattern 11A is shifted in a - y direction (upward direction in the drawing) by one measurement virtual pattern 12 with respect to the measurement virtual pattern group 12D of the phase pattern 11D (see FIG. 6(a)). As a result, when the phase patterns 11A to 11D overlap over time, the measurement virtual pattern groups 12A to 12D included in each of the phase patterns 11A to 11D overlap an entire incident region of the incident light L0 in the spatial light modulator 7.

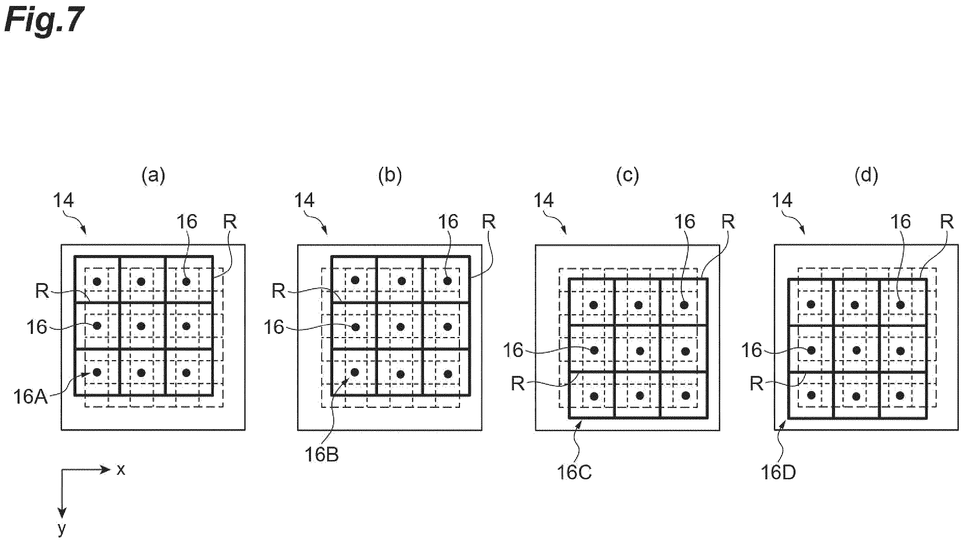

The imaging unit 4 is a unit that images the measurement light L1 modulated by the spatial light modulator 7. As a device configuring the imaging unit 4, for example, a CCD camera, a CMOS camera, or the like can be used. As illustrated in the drawing, the imaging unit 4 has a two-dimensional imaging region 14 (see FIGS. 7(a) to 7(d)) including a plurality of pixels (not illustrated). In the imaging region 14, the measurement light L1 collected by the measurement virtual pattern groups 12A to 12D included in the phase patterns 11A to 11D is repeatedly imaged in this order. The imaging unit 4 sequentially images optical images of focused spot groups 16A to 16D by the measurement virtual pattern groups 12A to 12D, and outputs respective pieces of image data to the analysis unit 5.

FIGS. 7(a) to 7(d) are schematic diagrams illustrating examples of focused spots imaged by the imaging unit in a case where the phase patterns illustrated in FIGS. 6(a) to 6(d) are used. Here, for convenience of description of the relationship between the shift of the measurement virtual pattern 12 and the shift of the focused spot 16, the focused spot 16 is illustrated at the reference position K0 (see FIG. 2) in a case where there is no wavefront distortion in the incident light L0. As illustrated in the drawing, the focused spot groups 16A to 16D correspond to the measurement virtual pattern groups 12A to 12D in the phase patterns 11A to 11D illustrated in FIGS. 6(a) to 6(d), respectively, and are configured by total of nine focused spots 16 in a 3 × 3 matrix.

A diameter of each of the focused spots 16 configuring the focused spot groups 16A to 16D is inversely proportional to an aperture (that is, a size of the measurement virtual pattern 12) of the microlens represented by the measurement virtual pattern 12. The reference positions K0 and K0 of the adjacent focused spots 16 and 16 are separated from each other at the interval corresponding to the arrangement pitch of the measurement virtual patterns 12. The detectable range R per unit of the focused spot 16 of the measurement light L1 formed by the measurement virtual pattern groups 12A to 12D is determined according to the arrangement pitch of the measurement virtual patterns 12. The smaller the arrangement pitch of the measurement virtual patterns 12, the smaller the detectable range R per unit of the focused spot 16. The larger the arrangement pitch of the measurement virtual patterns 12, the larger the detectable range R per unit of the focused spot 16.

When a position of the focused spot group 16A formed by the measurement virtual pattern group 12A is set as a reference position, a position of the focused spot group 16B shifts in the + x direction (right direction in the drawing) by the arrangement pitch of the measurement virtual patterns 12 with respect to the focused spot group 16A (see FIG. 7(b)). A position of the focused spot group 16C shifts in the + y direction (downward direction in the drawing) by the arrangement pitch of the measurement virtual patterns 12 with respect to the focused spot group 16B (see FIG. 7(c)).

A position of the focused spot group 16D shifts in the - x direction (left direction in the drawing) by the arrangement pitch of the measurement virtual patterns 12 with respect to the focused spot group 16C (see FIG. 7(d)). The position of the focused spot group 16A shifts in the - y direction (upward direction in the drawing) by the arrangement pitch of the measurement virtual patterns 12 with respect to the focused spot group 16D (see FIG. 7(a)).

The analysis unit 5 is a unit that analyzes the wavefront of the incident light L0 based on the imaging result by the imaging unit 4. The analysis unit 5 is physically a computer system including a memory such as a RAM and a ROM, a processor (arithmetic circuit) such as a CPU, a communication interface, and a storage unit such as a hard disk. Examples of the computer system include a personal computer, a cloud server, a smart device (smartphone, tablet terminal, or the like), a microcomputer, and a field-programmable gate array (FPGA). The analysis unit 5 may be a system integrated with the pattern generation unit 3. The analysis unit 5 executes a program stored in the memory by the CPU of the computer system to analyze the wavefront of the incident light L0.

The analysis unit 5 analyzes the wavefront of the incident light L0 based on a plurality of pieces of image data that are imaging results of the respective focused spot groups 16A to 16D generated using the measurement virtual pattern groups 12A to 12D shifted over time by the spatial light modulator 7. The analysis unit 5 detects a displacement amount (Δx, Δy) of the focused spot 16 from the reference position K0 for each detectable range R of the focused spot 16 based on the image data received from the imaging unit 4 (see FIG. 2). The analysis unit 5 detects the displacement amount of each focused spot 16 from the reference position K0 to detect the wavefront distortion of the incident light L0 in the cross-sectional region incident on the measurement virtual pattern 12 corresponding to each focused spot 16.

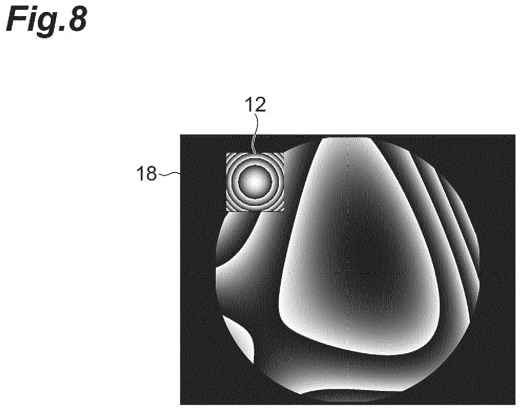

The analysis unit 5 may map the wavefront distortion in each cross-sectional region of the incident light L0 and generate a wavefront modulation pattern 18 (see FIG. 8) for modulating the wavefront of the incident light L0 to a desired wavefront according to the application of the output light L2. The wavefront modulation pattern 18 is a pattern that modulates the wavefront of the incident light L0 incident on the spatial light modulator 7, and is generated separately from the measurement virtual pattern 12. By outputting the design information generated by the analysis unit 5 to the pattern generation unit 3 and inputting the wavefront modulation pattern 18 generated by the pattern generation unit 3 to the spatial light modulator 7, the wavefront of the incident light L0 can be corrected such that the beam pattern of the output light L2 becomes various types such as a top-hat type and a Gaussian type.

The wavefront modulation pattern 18 is updated as needed according to the detection result of the wavefront distortion of the incident light L0. By modulating the incident light L0 using the wavefront modulation pattern 18, the wavefront of the output light L2 with which the processing target P is irradiated can be maintained at a desired wavefront. As illustrated in FIG. 8, in a case where the phase patterns 11A to 11D and the wavefront modulation pattern 18 are redundantly inputted to the spatial light modulator 7, it is possible to simultaneously perform the wavefront measurement of the incident light L0 and the wavefront modulation of the incident light L0.

The output unit 6 is a unit that outputs the output light L2 to the outside. In the present embodiment, as illustrated in FIG. 5, a beam splitter 19 is disposed on an optical path of the measurement light L1 and the output light L2 from the phase modulation unit 2 toward the imaging unit 4. The measurement light L1 is transmitted through the beam splitter 19 and heads toward the imaging unit 4, and the output light L2 is reflected by the beam splitter 19 and heads toward the processing target P. The output light L2 is focused by a focusing lens 20 and is irradiated to the surface of the processing target P. The beam splitter 19 is an element for adjusting the amount of light, and has a transmittance of about 5% (reflectance of about 95%), for example. Although not illustrated in FIG. 5, actually, a part of the output light L2 may be included in the light directed toward the imaging unit 4, and a part of the measurement light L1 may be included in the light directed toward the processing target P.

In the present embodiment, a focal point of the measurement light L1 is adjusted to match the imaging region 14 of the imaging unit 4, and a focal point of the output light L2 is adjusted to match the surface of the processing target P. In the present embodiment, a focal length of the measurement light L1 modulated by the measurement virtual pattern 12 and a focal length of the light (output light L2) modulated in a portion other than the measurement virtual pattern 12 are different from each other. When the focal length of the measurement light L1 that is transmitted from the spatial light modulator 7 through the beam splitter 19 and forms an image in the imaging region 14 of the imaging unit 4 is F1, and the focal length of the output light L2 that is reflected from the spatial light modulator 7 by the beam splitter 19 and forms an image on the surface of the processing target P via the focusing lens 20 is F2, F1 ≠ F2 is satisfied. The magnitude relationship between F1 and F2 is arbitrary. F1 > F2 or F2 > F1.

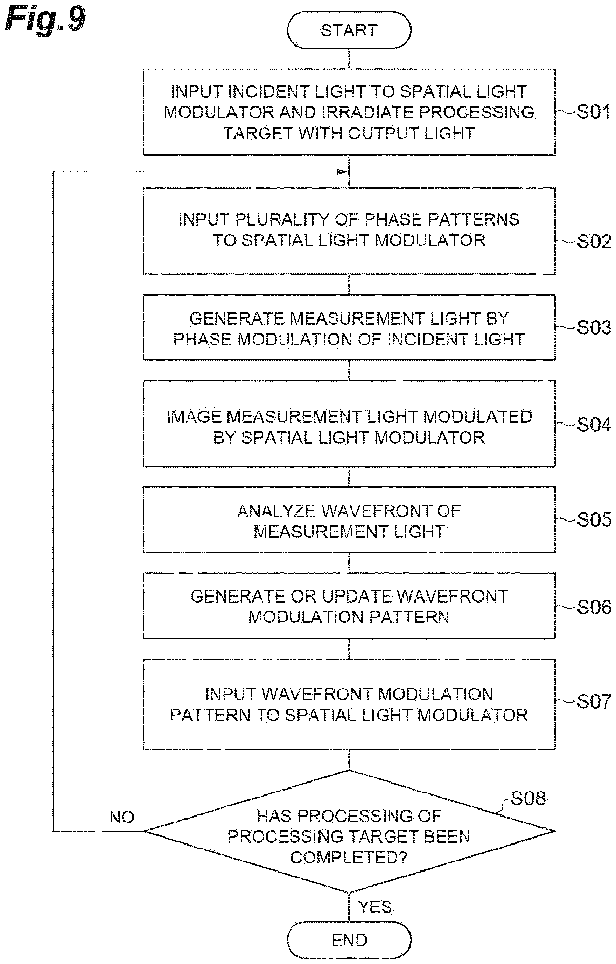

FIG. 9 is a flowchart illustrating an example of an operation of the wavefront measurement device illustrated in FIG. 5. As illustrated in the drawing, in the wavefront measurement device 1, first, input of incident light L0 to the spatial light modulator 7 and irradiation of a processing target P with output light L2 are performed (step S01). Next, a plurality of phase patterns 11 are inputted to the spatial light modulator 7 (step S02: pattern input step). In step S02, phase patterns 11A to 11D for which measurement virtual pattern groups 12A to 12D are shifted to positions different from each other are repeatedly inputted to the spatial light modulator 7 in this order. When the incident light L0 is incident on the spatial light modulator 7 to which the phase patterns 11A to 11D are sequentially inputted, phase modulation of the incident light L0 is performed, and measurement light L1 is generated (step S03: phase modulation step).

Next, the measurement light L1 modulated by the spatial light modulator 7 is imaged (step S04: imaging step). In step S04, optical images of the focused spot groups 16A to 16D by the measurement virtual pattern groups 12A to 12D are sequentially imaged. That is, pieces of image data of the optical images of the focused spot groups 16A to 16D shifted over time to different positions of the imaging region 14 are sequentially acquired by the measurement virtual pattern groups 12A to 12D.

After the image data is acquired, a wavefront of the incident light L0 is analyzed based on the imaging result in step S04 (step S05: analysis step). In step S05, the wavefront of the incident light L0 is analyzed based on a plurality of pieces of image data that are imaging results of the respective focused spot groups 16A to 16D generated using the measurement virtual pattern groups 12A to 12D shifted over time by the spatial light modulator 7. In step S05, by detecting a displacement amount of each focused spot 16 from a reference position K0, wavefront distortion of the incident light L0 in a cross-sectional region incident on the measurement virtual pattern 12 corresponding to each focused spot 16 is detected. After the detection of the wavefront distortion, a wavefront modulation pattern 18 is generated (step S06). In a case where the wavefront modulation pattern 18 has already been generated, the wavefront modulation pattern 18 is updated based on a new detection result of the wavefront.

Next, the wavefront modulation pattern 18 generated or updated in step S06 is inputted to the spatial light modulator 7 (step S07). The wavefront modulation pattern 18 is superimposed on the phase patterns 11A to 11D and inputted to the spatial light modulator 7, and analysis of the wavefront of the incident light L0 and irradiation of the processing target P with the output light L2 are simultaneously performed. Thereafter, it is determined whether or not processing of the processing target P has been completed (step S08). In a case where it is determined in step S08 that the processing of the processing target P has been completed, the processing ends. In a case where it is determined in step S08 that the processing of the processing target P has not been completed, the processing returns to step S02, and the processing of steps S02 to S08 is executed again.

As described above, in the wavefront measurement device 1, in the plurality of phase patterns 11A to 11D to be inputted to the spatial light modulator 7, the measurement virtual pattern groups 12A to 12D are shifted to positions different from each other, and the focused spot groups 16A to 16D of the measurement light L1 modulated by the spatial light modulator 7 shift over time to different positions of the imaging region 14. As a result, in the plurality of phase patterns 11A to 11D, the pitch (center-to-center distance) of the measurement virtual patterns 12 included in the measurement virtual pattern groups 12A to 12D can be increased, and the arrangement pitch of the focused spots 16 of the focused spot groups 16Ato 16D in the imaging region 14 can be increased. By increasing the arrangement pitch of the focused spots 16, the detectable range R per unit of the focused spot 16 can be widened, such that the dynamic range can be expanded. Further, by shifting the focused spot 16 over time, the spatial resolution can be improved in a state where the dynamic range is expanded. That is, at the time of imaging using the plurality of phase patterns 11A to 11D, imaging is performed in a state where the arrangement pitch of the focused spots 16 is increased, and imaging results obtained by shifting the focused spots 16 by the plurality of phase patterns 11A to 11D overlap, whereby spatial resolution is improved. Therefore, in the wavefront measurement device 1, both the expansion of the dynamic range and the improvement of the spatial resolution can be achieved.

In the present embodiment, the pattern generation unit 3 forms a plurality of measurement virtual patterns (measurement virtual pattern groups 12A to 12D) in each of the plurality of phase patterns 11A to 11D. As a result, since the spatial resolution of the image obtained by one imaging can be improved, the number of times of shifting the focused spot 16 (the number of times of imaging) can be reduced. Therefore, the scanning time of the incident light L0 in the cross section by the measurement virtual pattern 12 can be shortened.

In the present embodiment, the pattern generation unit 3 generates each of the phase patterns 11A to 11D such that the measurement virtual pattern groups 12A to 12D do not overlap each other when the plurality of phase patterns 11A to 11D overlap over time. For example, in the measurement virtual pattern groups 12A to 12D, the adjacent measurement virtual patterns 12 and 12 are separated from each other at the interval corresponding to one measurement virtual pattern 12 (see FIGS. 6(a) to 6(d)). As a result, the wavefront measurement in an entire modulation region of the spatial light modulator 7 can be performed with minimum scanning as compared with the case where the phase patterns 11A to 11D are generated such that the measurement virtual pattern groups 12A to 12D partially overlap each other.

In the present embodiment, the pattern generation unit 3 generates each phase pattern such that the measurement virtual pattern groups 12A to 12D included in each of the plurality of phase patterns 11A to 11D occupy only a part of the modulatable region 13 in the spatial light modulator 7. As a result, the measurement light L1 modulated by the measurement virtual pattern groups 12A to 12D and the light modulated by the portion other than the measurement virtual pattern groups 12A to 12D can be simultaneously generated. Therefore, while the wavefront measurement of the incident light L0 is performed by the measurement light L1, light other than the measurement light L1 can be extracted to the outside as the output light L2.

In the present embodiment, the pattern generation unit 3 generates each of the phase patterns 11A to 11D such that the measurement virtual patterns 12 overlap the entire incident region of the incident light L0 in the spatial light modulator 7 when the plurality of phase patterns 11A to 11D overlap over time. As a result, the wavefront measurement can be performed in the entire incident region of the incident light L0. As a result, the wavefront modulation pattern 18 can be applied to the entire cross section of the output light L2, and the wavefront of the output light L2 can be easily brought close to a desired wavefront.

In the present embodiment, the pattern generation unit 3 generates and updates the wavefront modulation pattern 18 for the incident light L0 based on the analysis result by the analysis unit 5. As a result, it is possible to perform the wavefront modulation of the incident light L0 while performing the wavefront measurement of the incident light L0. In the present embodiment, a focal length of the measurement light L1 modulated by the measurement virtual pattern 12 and a focal length of the light (output light L2) modulated in a portion other than the measurement virtual pattern 12 are different from each other. As a result, even when light modulated by the portion other than the measurement virtual pattern 12 is extracted as the output light L2 while the wavefront measurement of the incident light L0 is performed, it is possible to prevent the output light L2 from focusing on the imaging region 14 of the imaging unit 4 and to prevent the measurement light L1 from focusing on the processing target P to which the output light L2 is extracted.

### [Modifications]

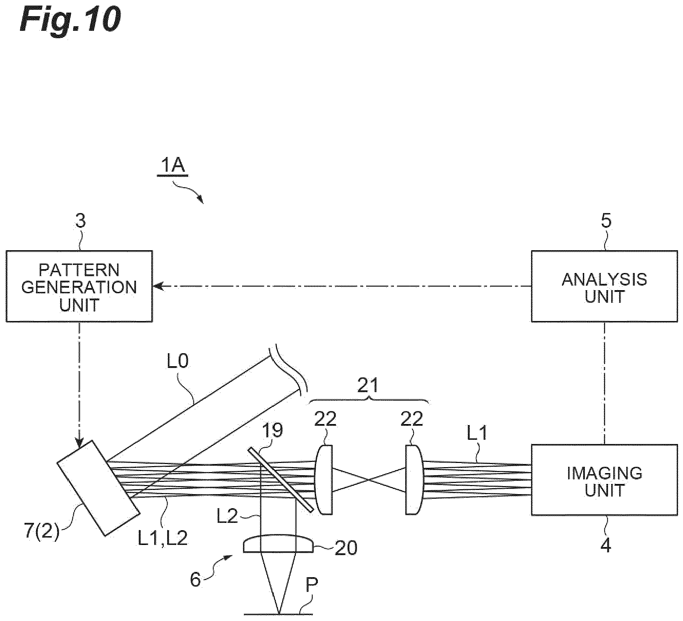

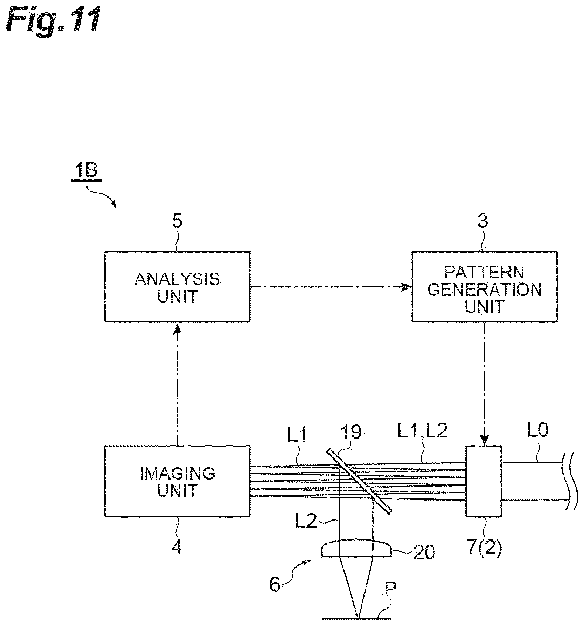

The present disclosure is not limited to the above embodiment. For example, as in a wavefront measurement device 1A illustrated in FIG. 10, an image transfer lens system 21 may be disposed in the optical path of measurement light L1 between the beam splitter 19 and the imaging unit 4. The image transfer lens system 21 can include, for example, a pair of convex lenses 22 and 22. In this case, it is not necessary to directly form an image of the focused spot 16 of the measurement light L1 in the imaging region 14 of the imaging unit 4, such that a degree of freedom of optical arrangement can be increased. In the above embodiment, an aspect is adopted in which the incident light L0 is reflected by the spatial light modulator 7, but an aspect may be adopted in which the incident light L0 is transmitted to the spatial light modulator 7 as in a wavefront measurement device 1B illustrated in FIG. 11, for example. Even in such an aspect, the same effects as those of the above embodiment are obtained.

In the above embodiment, the square measurement virtual pattern 12 is exemplified, but the shape of the measurement virtual pattern 12 may be arbitrary shape as long as the focused spot 16 can be formed in the imaging region 14 of the imaging unit 4. That is, the measurement virtual pattern 12 is not limited to the square shape, and may have another shape such as a circle, a rectangle, an ellipse, a triangle, or a polygon.

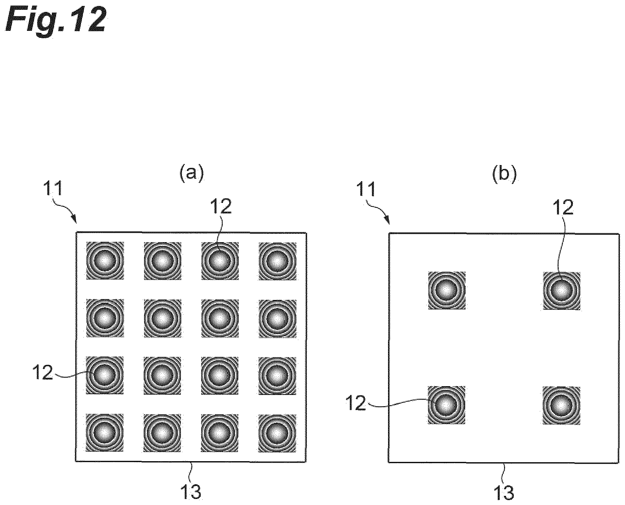

In the above embodiment, the phase patterns 11A to 11D in which the measurement virtual patterns 12 are arranged in the 3 × 3 matrix have been exemplified, but the number of arrays and the arrangement pitch of the measurement virtual patterns 12 can be arbitrarily set. For example, as illustrated in FIG. 12(a), a phase pattern 11 in which the measurement virtual patterns 12 are arranged in a 4 × 4 matrix may be used, and as illustrated in FIG. 12(b), a phase pattern 11 in which the measurement virtual patterns 12 are arranged in a 2 × 2 matrix may be used.

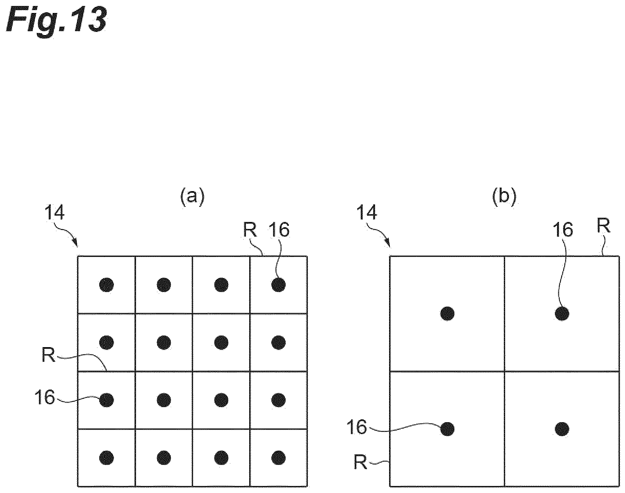

In a case where the size of the measurement virtual pattern 12 is not changed, the larger the number of arrays of the measurement virtual patterns 12, the smaller the arrangement pitch between the adjacent focused spots 16 and 16 (see FIG. 13(a)). Therefore, the spatial resolution is improved. Since the number of times of imaging required to obtain a constant spatial resolution can be reduced by improving the spatial resolution, the speed of the wavefront measurement can also be improved. In addition, in a case where the size of the measurement virtual pattern 12 is not changed, the larger the number of arrays of the measurement virtual patterns 12, the larger the area occupied by the measurement virtual patterns 12 with respect to the modulatable region 13 of the spatial light modulator 7. Therefore, the number of patterns of the phase patterns 11 required for the wavefront measurement of the entire incident region of the incident light L0 can be reduced, and the number of times of imaging can also be reduced, such that the speed of the wavefront measurement can be improved.

In a case where the size of the measurement virtual pattern 12 is not changed, the smaller the number of arrays of the measurement virtual patterns 12, the larger the arrangement pitch between the adjacent focused spots 16 and 16 (see FIG. 13(b)). Therefore, the detectable range R per unit of the focused spot 16 is increased, and the dynamic range is improved. In a case where the size of the measurement virtual pattern 12 is not changed, the smaller the number of arrays of the measurement virtual patterns 12, the smaller the area occupied by the measurement virtual patterns 12 with respect to the modulatable region 13 of the spatial light modulator 7. Therefore, a loss of light used for the wavefront measurement is suppressed, and the wavefront measurement of the incident light L0 becomes possible in a state where an intensity of the output light L2 is sufficiently maintained.

The wavefront of the incident light L0 may change over time due to an influence of self-heating or the like of the light source. When the laser processing is performed on the processing target P as in the present embodiment, it is useful to measure the wavefront in real time and modulate the wavefront of the incident light L0 (output light L2). In this case, it is preferable to increase the number of arrays of the measurement virtual patterns 12 and to perform the wavefront measurement at a high speed to generate the wavefront modulation pattern 18 at a stage before the irradiation of the processing target P with the output light L2. At a stage during the irradiation of the processing target P with the output light L2, an aspect may be adopted in which, by reducing the number of arrays without changing the size of the measurement virtual patterns 12 or reducing the size without changing the number of arrays of the measurement virtual patterns, the area occupied by the measurement virtual patterns 12 with respect to the modulatable region 13 of the spatial light modulator 7 is made relatively small, and the wavefront measurement is performed in real time while maintaining the intensity of the output light L2.

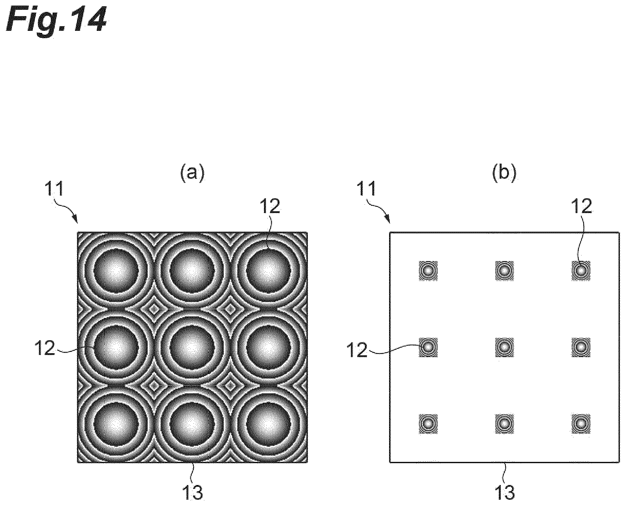

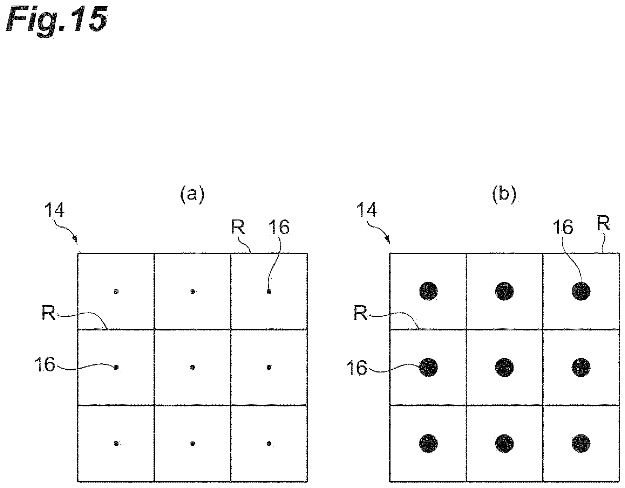

The size of the measurement virtual pattern 12 can also be arbitrarily adjusted. For example, as illustrated in FIG. 14(a), the size of the measurement virtual pattern 12 may be about twice the size of the measurement virtual pattern 12 illustrated in FIGS. 6(a) to 6(d). In addition, for example, as illustrated in FIG. 14(b), the size of the measurement virtual pattern 12 may be about half the measurement virtual pattern 12 illustrated in FIGS. 6(a) to 6(d). The size of the focused spot 16 in the imaging region 14 varies depending on the size of the measurement virtual pattern 12. When the size of the measurement virtual pattern 12 is increased as illustrated in FIG. 14(a), the size of the focused spot 16 in the imaging region 14 decreases (see FIG. 15(a)). When the size of the measurement virtual pattern 12 is reduced as illustrated in FIG. 14(b), the size of the focused spot 16 in the imaging region 14 increases (see FIG. 15(b)).

When the size of the focused spot 16 is reduced, the intensity of light at the focused spot 16 increases. For example, in a case where the intensity of the incident light L0 is strong at a center portion of the laser cross section and is weak at a peripheral portion, the accuracy of the wavefront measurement is stabilized by changing the size of the measurement virtual pattern 12 according to the position at which the measurement virtual pattern 12 is shifted. When the size of the focused spot 16 is increased, a center point of the focused spot 16 can be grasped by performing center calculation based on an intensity distribution of the focused spot 16. Therefore, regardless of the size of the measurement virtual pattern 12, both the improvement of the dynamic range and the improvement of the spatial resolution can be achieved.

In the above embodiment, the plurality of measurement virtual patterns 12 are formed in each of the plurality of phase patterns 11A to 11D, but the pattern generation unit 3 may form a single measurement virtual pattern 12 in each of the plurality of phase patterns 11. Also in this case, by generating the plurality of phase patterns 11 for which the single measurement virtual pattern 12 is shifted to positions different from each other, the same effects as those of the above embodiment are obtained. In addition, in the case of the single measurement virtual pattern 12, the detectable range R per unit of the focused spot 16 of the measurement light L1 can be sufficiently secured. For example, in the case of the single measurement virtual pattern 12, since a single focused spot 16 is formed in the imaging region 14, the entire region of the imaging region 14 can be set as the detectable range R. Therefore, the dynamic range can be further expanded.

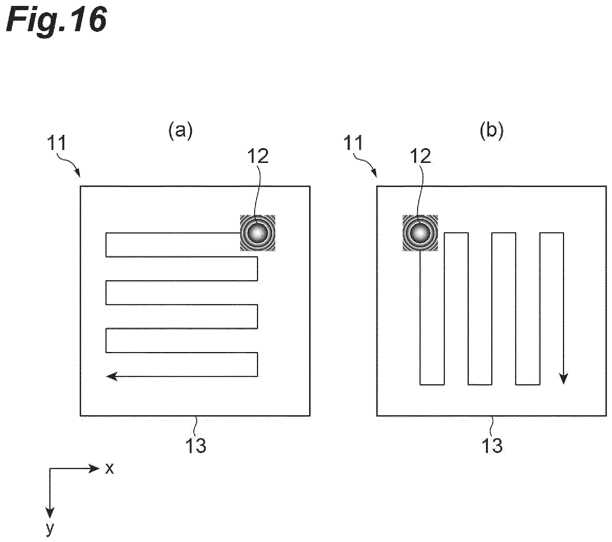

The shifting method (scanning direction) of the measurement virtual pattern 12 by the plurality of phase patterns 11 can be arbitrarily set. In a case where each phase pattern 11 includes a single measurement virtual pattern 12, for example, as illustrated in FIG. 16(a), the measurement virtual pattern 12 may be reciprocated in the - x direction (left direction in the drawing) and the + x direction (right direction in the drawing) from an initial position, and the measurement virtual pattern 12 may be shifted in the + y direction for each scan in the -x direction and the + x direction.

In addition, for example, as illustrated in FIG. 16(b), the measurement virtual pattern 12 may be reciprocated in the + y direction (downward direction in the drawing) and the - y direction (upward direction in the drawing) from the initial position, and the measurement virtual pattern 12 may be shifted in the + x direction for each scan in the + y direction and the - y direction. The measurement virtual pattern 12 may be shifted in a direction horizontally reversed from that in FIG. 16(a), or the measurement virtual pattern 12 may be shifted in a direction vertically reversed from that in FIG. 16(b).

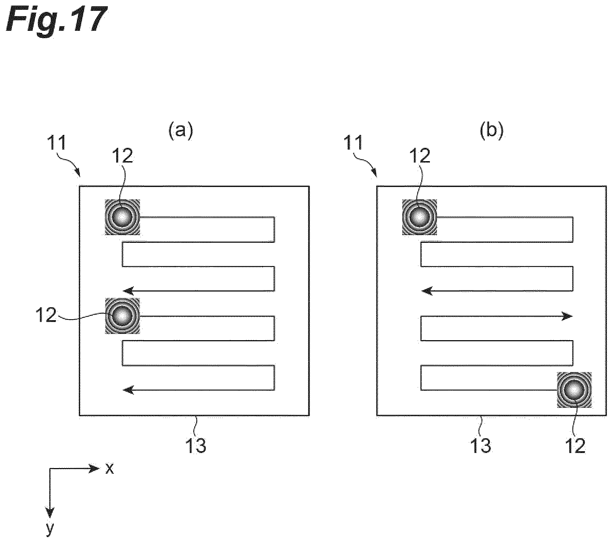

In a case where a plurality of measurement virtual patterns 12 are included in each phase pattern 11, for example, as illustrated in FIG. 17(a), each of the measurement virtual patterns 12 may be reciprocated in the + x direction (right direction in the drawing) and the - x direction (left direction in the drawing) from the initial position, and the measurement virtual patterns 12 may be shifted in the + y direction for each scan in the + x direction and the - x direction.

In addition, for example, as illustrated in FIG. 17(b), an aspect may be adopted in which the scanning directions of the pair of measurement virtual patterns 12 and 12 are reversed. In this case, one of the measurement virtual patterns 12 may be reciprocated in the + x direction (right direction in the drawing) and the -x direction (left direction in the drawing) from the initial position, and the measurement virtual pattern 12 may be shifted in the + y direction for each scan in the + x direction and the -x direction. The other of the measurement virtual patterns 12 may be reciprocated in the -x direction (left direction in the drawing) and the + x direction (right direction in the drawing) from the initial position, and the measurement virtual pattern 12 may be shifted in the -y direction for each scan in the -x direction and the + x direction.

In the examples of FIGS. 17(a) and 17(b), the scan regions of the measurement virtual patterns 12 do not overlap each other. As a result, the number of patterns of the phase patterns 11 required for the wavefront measurement of the entire incident region of the incident light L0 can be reduced, and the number of times of imaging can also be reduced, such that the speed of the wavefront measurement can be improved. As in the cases of FIGS. 16(a) and 16(b), each measurement virtual pattern 12 may be shifted in the direction horizontally reversed from that in FIG. 17(a), or each measurement virtual pattern 12 may be shifted in the direction vertically reversed from that in FIG. 17(b). Even when the number of measurement virtual patterns 12 included in the phase pattern 11 is still larger, the shifting method illustrated in FIGS. 17(a) and 17(b) may be applied to each measurement virtual pattern 12.

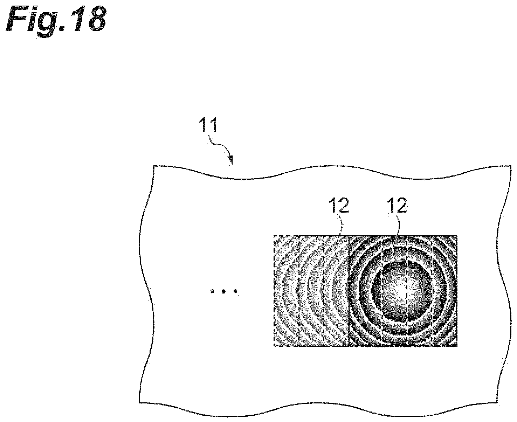

In the above embodiment, the adjacent measurement virtual patterns 12 and 12 in the phase patterns 11A to 11D are separated from each other at the interval corresponding to one measurement virtual pattern 12, and the measurement virtual patterns 12 do not overlap each other when the plurality of phase patterns 11 overlap over time. However, the shifting method of the measurement virtual pattern 12 is not limited thereto. For example, as illustrated in FIG. 18, the pattern generation unit 3 may generate each phase pattern 11 such that the measurement virtual patterns 12 and 12 partially overlap each other when the plurality of phase patterns 11 overlap over time.

According to such a configuration, even when the number of measurement virtual patterns 12 arranged in each phase pattern 11 is reduced, the arrangement pitch of the focused spots 16 in the imaging region 14 can be reduced. Therefore, the spatial resolution is further improved. The overlapping width of the portions of the measurement virtual patterns 12 and 12 is not particularly limited. A half or more of the regions of the measurement virtual patterns 12 and 12 may overlap, and a less than half of the regions of the measurement virtual patterns 12 and 12 may overlap.

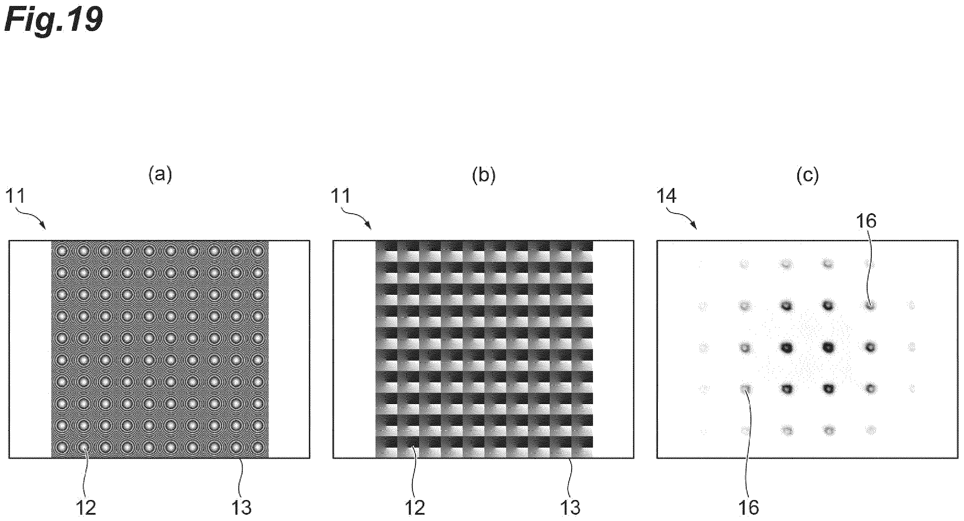

In the above embodiment, the microlens-shaped pattern is exemplified as the measurement virtual pattern 12, but the aspect of the measurement virtual pattern 12 is not limited thereto. The measurement virtual pattern 12 may be, for example, a pattern of a diffraction grating shape or a pattern of a hologram array shape. Alternatively, for example, 10 × 10 measurement virtual patterns 12 having a microlens shape illustrated in FIG. 19(a) and 10 × 10 measurement virtual patterns 12 having an optical spiral shape illustrated in FIG. 19(b) may be superimposed on each other. In this case, as illustrated in FIG. 19(c), the focused spots 16 on the imaging region 14 are formed by 10 × 10 multipoint optical vortex beams. Also in such an aspect, by shifting the measurement virtual pattern 12 over time, the same effects as those of the above embodiment are obtained.

### Reference Signs List

- 1, 1A, 1B: Wavefront measurement device
- 2: Phase modulation unit
- 3: Pattern generation unit
- 4: Imaging unit
- 5: Analysis unit
- 7: Spatial light modulator
- 11: Phase pattern
- 12: Measurement virtual pattern
- 13: Modulatable region
- 14: Imaging region
- 16: Focused spot
- 18: Wavefront modulation pattern
- L0: Incident light
- L1: Measurement light

## Claims

1. A wavefront measurement device comprising:
a phase modulation unit having a spatial light modulator that modulates incident light;
a pattern generation unit configured to generate a phase pattern to be inputted to the spatial light modulator;
an imaging unit having an imaging region for imaging an image of at least a portion of the incident light modulated by the spatial light modulator as measurement light; and
an analysis unit configured to analyze a wavefront of the incident light based on an imaging result by the imaging unit, wherein
the pattern generation unit generates a plurality of phase patterns for which a measurement virtual pattern is shifted to positions different from each other such that a focused spot of the measurement light modulated by the spatial light modulator shifts over time to different positions in the imaging region.

2. The wavefront measurement device according to claim 1, wherein
the pattern generation unit forms a plurality of measurement virtual patterns in each of the plurality of phase patterns.

3. The wavefront measurement device according to claim 1, wherein
the pattern generation unit forms a single measurement virtual pattern in each of the plurality of phase patterns.

4. The wavefront measurement device according to any one of claims 1 to 3, wherein
the pattern generation unit generates each phase pattern such that the measurement virtual patterns do not overlap each other in a case where the plurality of phase patterns overlap over time.

5. The wavefront measurement device according to any one of claims 1 to 3, wherein
the pattern generation unit generates each phase pattern such that the measurement virtual patterns partially overlap each other in a case where the plurality of phase patterns overlap over time.

6. The wavefront measurement device according to any one of claims 1 to 5, wherein
the pattern generation unit generates each phase pattern such that the measurement virtual patterns included in each of the plurality of phase patterns occupy only a part of a modulatable region in the spatial light modulator.

7. The wavefront measurement device according to any one of claims 1 to 6, wherein
the pattern generation unit generates each phase pattern such that the measurement virtual patterns overlap an entire incident region of the incident light in the spatial light modulator when the plurality of phase patterns overlap over time.

8. The wavefront measurement device according to any one of claims 1 to 7, wherein
the pattern generation unit generates and updates a wavefront modulation pattern for the incident light based on an analysis result by the analysis unit.

9. The wavefront measurement device according to any one of claims 1 to 8, wherein
in the incident light, a focal length of the measurement light modulated by the measurement virtual pattern and a focal length of light modulated by a portion other than the measurement virtual pattern are different from each other.

10. A wavefront measurement method comprising:
a pattern input step of inputting a phase pattern to a spatial light modulator;
a phase modulation step of causing incident light to be incident on the spatial light modulator to which the phase pattern is inputted and performing phase modulation on the incident light;
an imaging step of imaging a part of the incident light modulated by the spatial light modulator as measurement light in an imaging region of an imaging unit;
an analysis step of analyzing a wavefront of the incident light based on an imaging result in the imaging step, wherein
in the pattern input step, a plurality of phase patterns for which a measurement virtual pattern is shifted to positions different from each other are inputted such that a focused spot of the measurement light modulated by the spatial light modulator shifts over time to different positions of the imaging region.
